# EUROPEAN PATENT SPECIFICATION

(11) **EP 2 426 173 B1**
(45) Date of publication and mention of the grant of the patent: **23.10.2013**
(21) Application number: 10769876.3
(22) Date of filing: 02.04.2010
(51) Int. Cl.: C08L 67/00, C08L 23/04, C08L 23/10, C08K 3/00, C08L 23/02, C08L 67/03, C08L 23/06

(54) **WHOLLY AROMATIC LIQUID CRYSTAL POLYESTER RESIN COMPOUND HAVING IMPROVED MOULD-RELEASE PROPERTIES, AND A PRODUCTION METHOD THEREFOR**
VOLLAROMATISCHE FLÜSSIGE KRISTALLINE POLYESTERHARZVERBINDUNG MIT VERBESSERTEN FORMLÖSUNGSEIGENSCHAFTEN SOWIE VERFAHREN ZU IHRER HERSTELLUNG
COMPOSÉ DE RÉSINE DE POLYESTER CRISTAL LIQUIDE ENTIÈREMENT AROMATIQUE PRÉSENTANT DES PROPRIÉTÉS DE DÉMOULAGE AMÉLIORÉES, ET PROCÉDÉ DE PRODUCTION DE CE COMPOSÉ

(30) Priority: 29.04.2009 KR 20090037686
(43) Date of publication of application: 07.03.2012
(73) Proprietor: Samsung Fine Chemicals Co., Ltd., Ulsan-city 680-090 (KR)
(72) Inventor: LEE, Youn Eung, Daejeon-city 301-152 (KR); SUH, Sang Hyuk, Daejeon-city 305-509 (KR); SHIN, Young Hak, Daejeon-city 305-752 (KR); LEE, Jin Kyu, Busan-city 617-774 (KR); KIM, Mahn Jong, Daejeon-city 305-761 (KR)
(74) Representative: von Kreisler Selting Werner
(86) International application number: PCT/KR2010/002033
(87) International publication number: WO 2010/126231

(56) References cited:
- EP-A2- 0 779 338
- JP-A- 2006 104 370
- JP-A- 2006 206 824
- KR-B1- 100 390 087
- KR-B1- 100 702 580
- US-A1- 2006 047 100

## Description

### Technical Field

The present invention relates to a wholly aromatic liquid crystalline polyester resin compound and a method of preparing the same, and more particularly, to a wholly aromatic liquid crystalline polyester resin compound including at least one of a polyethylene-based resin and a polypropylene-based resin as an additive, and a method of preparing the same.

### Background Art

Wholly aromatic liquid crystalline polyester resins have good physical properties of heat resistance, dimensional stability, and fluidity when being melted, and thus are widely used around the world, mainly in the electronic parts industry, as materials for injection molding. Particularly, due to excellent dimensional stability and electricity insulation performance, their usage has been expanding into films for electronic materials and materials for substrates.

If wholly aromatic liquid crystalline polyester resins are used in injection molding, poor mold release by which a molded article is not contracted in the mold or clings to the mold may easily occur.

### Detailed Description of the Invention

### Technical problem

The present invention provides a wholly aromatic liquid crystalline polyester resin compound including at least one of a polyethylene-based resin and a polypropylene-based resin as an additive.

The present invention also provides a method of preparing a wholly aromatic liquid crystalline polyester resin compound, the method including adding at least one of a polyethylene-based resin and a polypropylene-based resin as an additive, wherein weight average molecular weights of the polyethylene-based resin and the Polypropylene-based resin are in the range of 1,000 to 5,000, respectively.

### Technical Solution

According to an aspect of the present invention, there is provided a wholly aromatic liquid crystalline polyester resin compound including at least one of a polyethylene-based resin and a polypropylene-based resin as an additive.

Weight average molecular weights of the polyethylene-based resin and the polypropylene-based resin are in the range of 1,000 to 5,000, respectively.

The total amount of the polyethylene-based resin and the polypropylene-based resin may be in the range of 500 to 10,000 ppm based on the total weight of the wholly aromatic liquid crystalline polyester resin compound.

The polyethylene-based resin may include at least one selected from the group consisting of polyethylene (PE), polyethylene wax (PE Wax), oxidized polyethylene wax (Oxidized PE Wax), high-density polyethylene (HDPE), and ultrahigh-density polyethylene (UHMWPE).

The polypropylene-based resin may include polypropylene.

The wholly aromatic liquid crystalline polyester resin compound may further include an inorganic filler as an additive.

The inorganic filler may include at least one selected from the group consisting of glass fiber, talc, calcium carbonate, mica, and clay.

The wholly aromatic liquid crystalline polyester resin compound may further include a stabilizer as an additive.

The stabilizer may include at least one selected from the group consisting of calcium montanate, calcium behenate, and calcium stearate.

According to another disclosure, there is provided a method of preparing a wholly aromatic liquid crystalline polyester resin compound, the method including: mixing a wholly aromatic liquid crystalline polyester resin and an inorganic filler, and melt-kneading the mixture; and adding at least one of a polyethylene-based resin and a polypropylene-based resin to the melt-kneaded mixture, mixing and drying the mixture.

According to another disclosure, there is provided a method of preparing a wholly aromatic liquid crystalline polyester resin compound, the method including mixing a wholly aromatic liquid crystalline polyester resin, at least one of a polyethylene-based resin and a polypropylene-based resin, and an inorganic filler, and melt-kneading the mixture.

The method may include adding at least one of a polyethylene-based resin and a polypropylene-based resin to a wholly aromatic liquid crystalline polyester resin, and mixing and drying the mixture; and mixing the mixture with an inorganic filler and melt-kneading the mixture.

### Advantageous Effects

According to an embodiment of the present invention, there may be provided a wholly aromatic liquid crystalline polyester resin compound having enhanced releasing property by including at least one of a polyethylene-based resin and a polypropylene-based resin as an additive, and a method of preparing the same.

### Mode of the Invention

Hereinafter, a wholly aromatic liquid crystalline polyester resin compound and a method of preparing the same according to embodiments of the present invention will be described in detail.

A wholly aromatic liquid crystalline polyester resin compound according to an embodiment of the present invention includes at least one of a polyethylene-based resin and a polypropylene-based resin as an additive, wherein weight average molecular weights of the polyethylene-based resin and the polypropylene-based resin are in the range of 1,000 to 5,000, respectively. The polyethylene resin and the polypropylene resin enhance releasing property of the wholly aromatic liquid crystalline polyester resin compound, resulting in assisting the resin compound to be easily separated from a mold after a molded article is produced.

A wholly aromatic liquid crystalline polyester resin used in the preparation of the wholly aromatic liquid crystalline polyester resin compound may be prepared according to the following steps:
(a) synthesizing a wholly aromatic liquid crystalline polyester pre-polymer by condensation polymerizing at least two monomers; and
(b) synthesizing a wholly aromatic liquid crystalline polyester resin by solid phase condensation polymerizing the pre-polymer.

The monomers used in step (a) may include at least one compound selected from the group consisting of aromatic diol, aromatic diamine, and aromatic hydroxylamine; and aromatic dicarboxylic acid. In addition, the monomer may further include aromatic hydroxy carboxylic acid and/or aromatic amino carboxylic acid.

The synthesis of step (a) may be performed using solution condensation polymerization or bulk condensation polymerization. In addition, a monomer having reactivity enhanced (i.e., acylated monomer) by pre-treatment with chemicals such as an acylating agent (particularly, acetylating agent) may be used in step (a) in order to expedite the condensation polymerization.

To perform the solid phase condensation polymerization in step (b), the pre-polymer is required to be heated using, for example, a heating plate, hot air, hot fluid, or the like. By-products produced during the solid phase condensation polymerization may be removed by purging with inert gas or by applying vacuum thereto.

In addition, the wholly aromatic liquid crystalline polyester resin may include a variety of repeating units in the chain thereof. For example, the repeating units are as follows.
(1) Repeating unit derived from aromatic diol:

   -O-Ar-O-
(2) Repeating unit derived from aromatic diamine:

   -HN-Ar-NH-
(3) Repeating unit derived from aromatic hydroxy amine:

   -HN-Ar-O-
(4) Repeating unit derived from aromatic dicarboxylic acid:

   -OC-Ar-CO-
(5) Repeating unit derived from aromatic hydroxy carboxylic acid:

   -O-Ar-CO-
(6) Repeating unit derived from aromatic amino carboxylic acid:

   -HN-Ar-CO-

In the formulae defined above, Ar may be phenylene, biphenylene, naphthalene, an aromatic compound in which two phenylene are bonded to each other via a carbon or non-carbon element, or an aromatic compound selected from the group consisting of phenylene, biphenylene, naphthalene, or two phenylene bonded to each other by carbon or a non-carbon element in which at least one hydrogen atom is substituted with other elements.

Weight average molecular weights of the polyethylene-based resin and the polypropylene-based resin is in the range of 1,000 to 5,000. If the weight average molecular weight of each of the polyethylene-based resin and the polypropylene-based resin is less than 1,000, effects of adding them are negligible. On the other hand, if the weight average molecular weight of each of the polyethylene-based resin and the polypropylene-based resin is greater than 5,000, a flow mark may be formed on the surface of a product produced by using the wholly aromatic liquid crystalline polyester resin compound including them (i.e. the resins).

The total amount of the polyethylene-based resin and the polypropylene-based resin may be in the range of 500 to 10,000 ppm based on the total weight of the wholly aromatic liquid crystalline polyester resin compound. If the total amount of the polyethylene-based resin and the polypropylene-based resin is less than 500 ppm based on the total weight of the wholly aromatic liquid crystalline polyester resin compound, effects of adding them are negligible. On the other hand, if the total amount of the polyethylene-based resin and the polypropylene-based resin is greater than 10,000 ppm, a large amount of gas is generated.

The polyethylene-based resin may include at least one selected from the group consisting of polyethylene (PE), polyethylene wax (PE Wax), oxidized polyethylene wax (Oxidized PE Wax), high-density polyethylene (HDPE), and ultrahigh-density polyethylene (UHMWPE), and the polypropylene-based resin may include polypropylene.

The wholly aromatic liquid crystalline polyester resin compound may further include an inorganic filler as an additive. The inorganic filler may include at least one selected from the group consisting of glass fiber, talc, calcium carbonate, mica, and clay.
The inorganic filler improves mechanical strength of a product obtained by injection molding.

The wholly aromatic liquid crystalline polyester resin compound may further include a stabilizer as an additive. The stabilizer may include at least one selected from the group consisting of calcium montanate, calcium behenate, and calcium stearate.

The wholly aromatic liquid crystalline polyester resin compound may be prepared by mixing the wholly aromatic liquid crystalline polyester resin and the inorganic filler in a predetermined ratio, melt-kneading the mixture, adding at least one of a polyethylene-based resin and a polypropylene-based resin to the melt-kneaded mixture by a predetermined amount, and mixing and drying the resultant. In the melt-kneading, a batch type kneader, a twin-screw extruder, or a mixing roll may be used. In addition, a lubricant may be used during the melt-kneading for smooth melt-kneading.

Meanwhile, the wholly aromatic liquid crystalline polyester resin compound may be prepared using any other method. That is, the wholly aromatic liquid crystalline polyester resin compound may also be prepared by mixing the wholly aromatic liquid crystalline polyester resin, at least one of the polyethylene-based resin and the polypropylene-based resin, and the inorganic filler in a predetermined ratio, and melt-kneading the mixture. In particular, the wholly aromatic liquid crystalline polyester resin compound may be prepared by adding at least one of the polyethylene-based resin and the polypropylene-based resin to the wholly aromatic liquid crystalline polyester resin by a predetermined amount, and mixing and drying the mixture, and then mixing the mixture with the inorganic filler in a predetermined ratio, and melt-kneading the resultant.

Hereinafter, one or more embodiments will be described in detail with reference to the following examples. However, these examples are not intended to limit the purpose and scope of the invention.

### Examples

### Preparation Example 1: Selection of Wholly Aromatic Liquid Crystalline Polyester Resin

A KF grade wholly aromatic polyester resin manufactured by Samsung Fine Chemicals Co., Ltd. was used. A melting point of the resin measured using a differential scanning calorimetry (DSC) was 305°C.

### Example 1 : Preparation of Wholly Aromatic Liquid Crystalline Polyester Resin Compound

The wholly aromatic liquid crystalline polyester resin prepared in Preparation Example 1 and a glass fiber, e.g., a ground glass fiber having a diameter of 10 µm and an average length of 150 µm, were mixed at a weight ratio of 6:4 (i.e., resin: glass fiber), and the mixture was melt-kneaded using a twin-screw extruder (L/D: 40, diameter: 25 mm). While the mixture was melt-kneaded, by-products were removed therefrom by applying vacuum to the twin-screw extruder.

Then, 5,000 ppm of polyethylene wax (PE Wax, Mitsui, Hi-wax), based on the total weight of the final wholly aromatic liquid crystalline polyester resin compound, was added to the melt-kneaded mixture and the mixture was mixed using an automatic mixing unit (manufactured by Jeil Industry Device Co., Ltd.) for 10 minutes, and then the resultant was dried using a hot-air dryer (A-Sung Plant Co., Ltd.) at 130°C for 2 hours.

Then, 300 ppm of calcium stearate (Ca-ST), based on the total weight of the wholly aromatic liquid crystalline polyester resin compound was added thereto, as a stabilizer, to prepare the wholly aromatic liquid crystalline polyester resin compound.

### Example 2 : Preparation of Wholly Aromatic Liquid Crystalline Polyester Resin Compound

A wholly aromatic liquid crystalline polyester resin compound was prepared in the same manner as in Example 1, except that 3,000 ppm of the polyethylene wax (Mitsui, Hi-wax) was used based on the total weight of the final wholly aromatic liquid crystalline polyester resin compound.

### Example 3 : Preparation of Wholly Aromatic Liquid Crystalline Polyester Resin Compound

A wholly aromatic liquid crystalline polyester resin compound was prepared in the same manner as in Example 1, except that 1,000 ppm of the polyethylene wax (Mitsui, Hi-wax) was used based on the total weight of the final wholly aromatic liquid crystalline polyester resin compound.

### Example 4 : Preparation of Wholly Aromatic Liquid Crystalline Polyester Resin Compound

A wholly aromatic liquid crystalline polyester resin compound was prepared in the same manner as in Example 1, except that polypropylene (PP, GS Caltex, H150) was used instead of polyethylene wax (Mitsui, Hi-wax).

### Example 5 : Preparation of Wholly Aromatic Liquid Crystalline Polyester Resin Compound

5,000 ppm of polyethylene wax (Mitsui, Hi-wax), based on the total weight of the final wholly aromatic liquid crystalline polyester resin compound, was added to the wholly aromatic liquid crystalline polyester resin prepared in Preparation Example 1, and the mixture was mixed using an automatic mixing/drying unit (A-Sung Plant Co., Ltd.) for 2 hours. Then, the mixture was mixed with a glass fiber, e.g., a ground glass fiber having a diameter of 10 µm and an average length of 150 µm, at a weight ratio of 6:4 (i.e., the mixture: glass fiber), and the mixture was melt-kneaded using a twin-screw extruder (L/D: 40, diameter: 25 mm), resulting in preparing a wholly aromatic liquid crystalline polyester resin compound. By-products were removed in the preparation of the wholly aromatic liquid crystalline polyester resin compound by applying vacuum to the twin-screw extruder.

### Example 6 : Preparation of Wholly Aromatic Liquid Crystalline Polyester Resin Compound

A wholly aromatic liquid crystalline polyester resin compound was prepared in the same manner as in Example 5, except that 3,000 ppm of the polyethylene wax (Mitsui, Hi-wax) was used based on the total weight of the final wholly aromatic liquid crystalline polyester resin compound.

### Example 7 : Preparation of Wholly Aromatic Liquid Crystalline Polyester Resin Compound

A wholly aromatic liquid crystalline polyester resin compound was prepared in the same manner as in Example 5, except that polypropylene (PP, GS Caltex, H150) was used instead of polyethylene wax (Mitsui, Hi-wax).

### Comparative Example 1: Preparation of Wholly Aromatic Liquid Crystalline Polyester Resin Compound

A wholly aromatic liquid crystalline polyester resin was prepared in the same manner as in Example 1, except that the polyethylene wax was not used.

### Evaluation Example

Releasing property, melt viscosity, tensile strength, flexural strength, and heat resistance of the wholly aromatic liquid crystalline polyester resin compounds prepared in Examples 1 to 7 and Comparative Example 1 were measured using the following methods.

### Releasing Property

A molded article was prepared using an injection molding apparatus (FANUC ROBOSHOT 2000i-50B) at a cylinder temperature of 380°C, at a mold temperature of 120°C, at an injection speed of 150 mm/s, for 4.5 seconds of cooling time, and at a holding pressure of 500 Kgf/cm². Then, the molded article was tried to be separated from a mold by protruding an ejector pin at a forward speed of the ejector of 50 mm/s, and the separation aspect was observed.

Then, the injection molding experiment was repeated while increasing the holding pressure by 100 Kgf/cm² at a time. In this regard, as the holding pressure decreases, it is easier to separate the molded article from the mold by the protrusion of the ejector pin. On the other hand, as the holding pressure increases, it is more difficult to separate the molded article from the mold. Accordingly, a maximum holding pressure at which the molded article is easily separated from the mold was measured. (Hereinafter, the maximum holding pressure is regarded as 'the degree of releasing property'. As the degree of releasing property increases, releasing property is enhanced).

### Melting Viscosity

Melt viscosity of each of the wholly aromatic liquid crystalline polyester resin compounds was measured according to ASTM D3835.

### Tensile Strength

Tensile strength of each of the wholly aromatic liquid crystalline polyester resin compounds were measured according to ASTM D638.

### Flexural Strength

Flexural strength of each of the wholly aromatic liquid crystalline polyester resin compounds was measured according to ASTM D790.

### Heat Resistance

Heat resistance of each of the wholly aromatic liquid crystalline polyester resin compounds were measured according to ASTM D648.

**Table 1**

| | PE Wax or PP content (wtppm) | | Addition of PE Wax or PP | Degree of releasing property (Kgf/cm²) | Melt viscosity (Poise) | Tensile strength (MPa) | Flexural strength (MPa) | Heat resistance (°C) |
|---|---|---|---|---|---|---|---|---|
| | PE Wax | PP | | | | | | |
| Example 1 | 5,000 | 0 | After melt-kneading | 1,800 | 359 | 132 | 165 | 321 |
| Example 2 | 3,000 | 0 | After melt-kneading | 1,400 | 487 | 134 | 166 | 321 |
| Example 3 | 1,000 | 0 | After melt-kneading | 1,000 | 594 | 135 | 166 | 322 |
| Example 4 | 0 | 5,000 | After melt-kneading | 1,000 | 502 | 133 | 163 | 321 |
| Example 5 | 5,000 | 0 | Before melt-kneading | 900 | 686 | 133 | 165 | 321 |
| Example 6 | 3,000 | 0 | Before melt-kneading | 900 | 722 | 134 | 165 | 322 |
| Example 7 | 0 | 5,000 | Before melt-kneading | 900 | 684 | 132 | 163 | 322 |
| Comparative Example 1 | 0 | 0 | - | 700 | 753 | 135 | 167 | 322 |

Referring to Table 1, the wholly aromatic liquid crystalline polyester resin compounds prepared in Examples 1 to 7 had better releasing property, and similar melt viscosity, tensile strength, flexural strength, and heat resistance compared to the wholly aromatic liquid crystalline polyester resin compound prepared in Comparative Example 1. In addition, physical properties of the wholly aromatic liquid crystalline polyester resin compound according to an embodiment of the present invention do not significantly change after being recycled a number of times. In particular, tensile strength and flexural strength were maintained up to 90% or more based on the initial tensile strength and flexural strength, respectively, and heat resistance was maintained up to 80% or more based on the initial heat resistance, until the wholly aromatic liquid crystalline polyester resin compound was recycled three times. If the recycled and non-recycled wholly aromatic liquid crystalline polyester resin compounds were mixed in a weight ratio of 50:50, tensile strength and flexural strength were maintained up to 95% or more based on the initial values, respectively, and heat resistance was maintained up to 90% or more based on the initial value even after being recycled three times.

## Claims

1. A wholly aromatic liquid crystalline polyester resin compound comprising at least one of a polyethylene-based resin and a polypropylene-based resin as an additive, wherein weight average molecular weights of the polyethylene-based resin and the polypropylene-based resin are in the range of 1,000 to 5,000, respectively.

2. The wholly aromatic liquid crystalline polyester resin compound of claim 1, wherein the total amount of the polyethylene-based resin and the polypropylene-based resin is in the range of 500 to 10,000 ppm based on the total weight of the wholly aromatic liquid crystalline polyester resin compound.

3. The wholly aromatic liquid crystalline polyester resin compound of claim 1, wherein the polyethylene-based resin comprises at least one selected from the group consisting of polyethylene (PE), polyethylene wax (PE Wax), oxidized polyethylene wax (Oxidized PE Wax), high-density polyethylene (HDPE), and ultrahigh-density polyethylene (UHMWPE).

4. The wholly aromatic liquid crystalline polyester resin compound of claim 1, wherein the polypropylene-based resin comprises polypropylene.

5. The wholly aromatic liquid crystalline polyester resin compound of claim 1, further comprising an inorganic filler as an additive.

6. The wholly aromatic liquid crystalline polyester resin compound of claim 5, wherein the inorganic filler comprises at least one selected from the group consisting of glass fiber, talc, calcium carbonate, mica, and clay.

7. The wholly aromatic liquid crystalline polyester resin compound of claim 1, further comprising a stabilizer as an additive.

8. The wholly aromatic liquid crystalline polyester resin compound of claim 7, wherein the stabilizer comprises at least one selected from the group consisting of calcium montanate, calcium behenate, and calcium stearate.

## Patentansprüche

1. Rein aromatisches flüssigkristallines Polyesterharz-Compound, umfassend wenigstens eines von einem Harz auf Polyethylenbasis und einem Harz auf Polypropylenbasis als Additiv, wobei die Gewichtsmittel des Molekulargewichts des Harzes auf Polyethylenbasis und des Harzes auf Polypropylenbasis jeweils im Bereich von 1000 bis 5000 liegen.

2. Rein aromatisches flüssigkristallines Polyesterharz-Compound gemäß Anspruch 1, wobei die Gesamtmenge des Harzes auf Polyethylenbasis und des Harzes auf Polypropylenbasis im Bereich von 500 bis 10 000 ppm liegt, bezogen auf das Gesamtgewicht des rein aromatischen flüssigkristallinen Polyesterharz-Compounds.

3. Rein aromatisches flüssigkristallines Polyesterharz-Compound gemäß Anspruch 1, wobei das Harz auf Polyethylenbasis wenigstens eines umfasst, das aus der Gruppe ausgewählt ist, die aus Polyethylen (PE), Polyethylenwachs (PE-Wachs), oxidiertem Polyethylenwachs (oxidiertem PE-Wachs), Polyethylen hoher Dichte (HDPE) und Polyethylen ultrahoher Dichte (UHMWPE) besteht.

4. Rein aromatisches flüssigkristallines Polyesterharz-Compound gemäß Anspruch 1, wobei das Harz auf Polypropylenbasis Polypropylen umfasst.

5. Rein aromatisches flüssigkristallines Polyesterharz-Compound gemäß Anspruch 1, das weiterhin einen anorganischen Füllstoff als Additiv umfasst.

6. Rein aromatisches flüssigkristallines Polyesterharz-Compound gemäß Anspruch 5, wobei der anorganische Füllstoff wenigstens eines umfasst, das aus der Gruppe ausgewählt ist, die aus Glasfaser, Talk, Calciumcarbonat, Glimmer und Ton besteht.

7. Rein aromatisches flüssigkristallines Polyesterharz-Compound gemäß Anspruch 1, das weiterhin einen Stabilisator als Additiv umfasst.

8. Rein aromatisches flüssigkristallines Polyesterharz-Compound gemäß Anspruch 7, wobei der Stabilisator wenigstens eines umfasst, das aus der Gruppe ausgewählt ist, die aus Calciummontanat, Calciumbehenat und Calciumstearat besteht.

## Revendications

1. Composé de résine de polyester cristal liquide entièrement aromatique comprenant au moins l'une d'une résine à base de polyéthylène et d'une résine à base de polypropylène comme additif, dans lequel les masses moléculaires moyennes pondérées de la résine à base de polyéthylène et de la résine à base de polypropylène se situent, respectivement, dans la plage de 1 000 à 5 000.

2. Composé de résine de polyester cristal liquide entièrement aromatique selon la revendication 1, dans lequel la quantité totale de la résine à base de polyéthylène et de la résine à base de polypropylène se situe dans la plage de 500 à 10 000 ppm sur la base du poids total du composé de résine de polyester cristal liquide entièrement aromatique.

3. Composé de résine de polyester cristal liquide entièrement aromatique selon la revendication 1, dans lequel la résine à base de polypropylène comporte au moins un composant sélectionné à partir du groupe constitué de polyéthylène (PE), de cire de polyéthylène (PE Wax), de cire de polyéthylène oxydée (Oxidized PE Wax), de polyéthylène de haute densité (HDPE) et de polyéthylène de densité ultra haute (UHMWPE).

4. Composé de résine de polyester cristal liquide entièrement aromatique selon la revendication 1, dans lequel la résine à base de polypropylène comporte du polypropylène.

5. Composé de résine de polyester cristal liquide entièrement aromatique selon la revendication 1, comprenant, de plus, une charge inorganique en tant qu'additif.

6. Composé de résine de polyester cristal liquide entièrement aromatique selon la revendication 5, dans lequel la charge inorganique comporte au moins un composant sélectionné à partir du groupe constitué de fibre de verre, de talc, de carbonate de calcium, de mica et d'argile.

7. Composé de résine de polyester cristal liquide entièrement aromatique selon la revendication 1, comprenant, de plus, un stabilisateur en tant qu'additif.

8. Composé de résine de polyester cristal liquide entièrement aromatique selon la revendication 7, dans lequel le stabilisateur comprend au moins un composant sélectionné à partir du groupe constitué de montanate de calcium, de béhénate de calcium et de stéarate de calcium.
